# EUROPEAN PATENT SPECIFICATION

(11) **EP 3 149 252 B1**
(45) Date of publication and mention of the grant of the patent: **30.12.2020**
(21) Application number: 15714080.7
(22) Date of filing: 16.03.2015
(51) Int. Cl.: E03F 1/00

(54) **CONTROLLER FOR VACUUM SEWAGE SYSTEM**
STEUERGERÄT FÜR UNTERDRUCKABWASSERSYSTEM
DISPOSITIF DE COMMANDE POUR UN SYSTÈME D'ÉGOUT SOUS VIDE

(30) Priority: 02.06.2014 US 201462006576 P; 10.03.2015 US 201514642872
(43) Date of publication of application: 05.04.2017
(73) Proprietor: Aqseptence Group, Inc., New Brighton MN 55112 (US)
(72) Inventor: BLOCHER, Troy E., Warsaw, IN 46582 (US); GROOMS, John M., Rochester, IN 46975 (US)
(74) Representative: Gevers Patents
(86) International application number: PCT/US2015/020641
(87) International publication number: WO 2015/187228

(56) References cited:
- EP-A1- 0 328 457
- EP-A1- 0 445 462
- EP-A2- 0 415 359
- EP-A2- 0 628 900
- EP-A2- 2 363 542
- DE-U1- 29 616 003
- US-A- 4 373 838
- US-B1- 6 467 494

## Description

The present invention relates generally to sewage systems which utilize differential pressures to produce sewage transport through the system and, in particular, to a controller for a vacuum sewage system.

Various vacuum operated controllers for evacuating liquids from a chamber are known. DE-U-29616003 is an example of such a device. Vacuum operated controllers are often utilized in connection with vacuum sewage systems. Generally speaking, these prior art devices utilize a device having a plurality of chambers. The controllers are activated in response to a particular quantity or level of sewage accumulation in a holding tank. Upon reaching the particular level of sewage, a pressure change in at least one of the chambers activates the controller, thereby activating a vacuum valve that causes removal of the sewage from the holding tank through a pipe system. Examples of such systems can be found in, for example, EP-A-0415359, EP-A-2363542, US-B-6467949, EP-A-0328457, EP-A-0628900, US-A-4373838 and EP-A-0445462.

Prior art systems typically utilize tubes external to the housing, often referred to as "dip tubes," to communicate air and/or pressure changes among the various chambers. Examples of such systems are found in EP-A-0415359, EP-A-0328457, US-A-4373838 and EP-A-0445462. In certain prior art devices, a needle valve may be utilized in connection with the dip tubes to regulate the rate of air flow through the dip tubes. An example of such a system may be found in US-A-4373838.

### SUMMARY OF THE INVENTION

One embodiment of the present invention includes a controller for a vacuum sewage system. The system includes a holding tank at substantially atmospheric pressure, a valve pit, a sensor pipe having a first end extending into the holding tank and a second end extending into the valve pit, a valve located in the valve pit and a discharge conduit for conveying sewage from the holding tank to a location exterior to the holding tank. The discharge conduit has a first section and a second section. The first section has a first end located in the holding tank and a second end in fluid communication with the valve. The second section has an end in fluid communication with the valve and a vacuum source for maintaining the second section of the discharge conduit under vacuum. The controller includes a housing having at least six chambers, a pressure sensor conduit, at least seven ports, at least four valve members, at least two flexible diaphragms and at least three air flow paths. The pressure sensor conduit has a first end in pressure communication with the sensor pipe and a second end in pressure communication with a first chamber. A first port is in communication with a second chamber and with a source of atmospheric pressure. A first flexible diaphragm is located between the first and second chambers. A second port extends between the second chamber and a third chamber. A first valve member is located at least partially within the second chamber for selectively opening and closing the second port so as to selectively permit or prevent air flow between the second and third chambers through the second port. A third port is in communication with the third chamber. A second flexible diaphragm is located between the third chamber and a fourth chamber. A first air flow path extends between the third and fourth chambers. A fourth port is in communication with a fifth chamber and with the second section of the discharge conduit. A second air flow path extends between the third, fourth and fifth chambers. A second valve member is located at least partially in the second air flow path to selectively permit or prevent air flow between the second, third and fourth chambers. A fifth port is in communication with the fifth chamber and a sixth chamber. A sixth port is in communication with the sixth chamber and with a source of substantially atmospheric pressure. A third valve member is located at least partially in the sixth chamber for selectively opening and closing the fifth port so as to selectively permit or prevent air flow between the fifth and sixth chambers through the fifth port and for selectively opening and closing the sixth port so as to selectively permit or prevent air flow between the sixth chamber and the source of substantially atmospheric pressure through the sixth port. A seventh port is in communication with the sixth chamber. A third air flow path extends between the second chamber and the seventh port. A fourth valve member is located at least partially in in the third air flow path.

In one embodiment of the invention, the fourth valve member includes an eighth port through which air at atmospheric pressure can flow when the fourth valve member is closed. The fourth valve member may be a duckbill valve.

In another embodiment, the fourth member valve is a check valve. The controller may include an opening through a portion of the housing in the third air flow path and the check valve may include a body extending through the opening, a head attached to the body on one side of the opening and a moveable flange connected to the body on the side of the opening opposite the head. A passageway may extend through the head. Another passageway may be formed in the housing adjacent the moveable flange and extend from the opening in the housing beyond the outer perimeter of the moveable flange.

According to the invention, a rod having a first end extends from the second flexible diaphragm and has a second end connected to the third valve member. The rod may extend through the fifth port. A portion of the rod may be tapered. Movement of the second flexible diaphragm imparts movement to the rod and the third valve member to selectively open and close the fifth and sixth ports. Further in accordance with the invention, an increase in pressure in the third chamber causes the second end of the rod to move toward the sixth port. In another embodiment, a decrease in pressure in the fourth chamber causes the second end of the rod to move toward the sixth port. In another embodiment, a decrease in pressure in the third chamber causes the second end of the rod to move toward the fifth port. In yet another embodiment of the invention, an increase in pressure in the fourth chamber causes the second end of the rod to move toward the fifth port.

In another embodiment of the present invention, a biasing means biases the third valve member toward the fifth port.

In another embodiment, an adjustable orifice is located at least partially within the first air flow path between the third and fourth chambers. The adjustable orifice regulates the rate of air flow from the third chamber to the fourth chamber. The adjustable orifice may include a member having at least two orifices of different sizes. In one embodiment, the member is rotatable. The member may be located on a shaft. In another embodiment, the controller includes a lever located at least partially outside the housing for rotating the member. In one embodiment, a detent member retains the rotatable member in a selected position. The detent member may include a compressible member.

According to the invention, the adjustable orifice includes a member having a first side, a second side and a first groove. The first groove is located in the first side of the member and the member further includes an orifice extending from the first side to the second side. The orifice creates an air flow path from the first groove through the member to the second side of the member. Furthermore, the second side of the member includes a second groove. The orifice creates an air flow path from the first groove to the second groove. In another embodiment, the second groove varies in width. In another embodiment, the second groove varies in depth. The adjustable orifice further includes a sealing member having an opening therein adjacent the second groove. Movement of the member selectively causes a larger or smaller volume segment of the second groove to be exposed within the opening in the sealing member to increase or decrease the rate of air flow through the adjustable orifice.

In one embodiment of the present invention, the controller further includes a magnet connected to the first diaphragm. The magnet has a first polarity. The controller may be activated by applying to the magnet a magnetic force having a second polarity opposite the first polarity.

In another embodiment of the invention, movement of the first flexible diaphragm toward the second chamber activates the first valve member to open the second port. In one embodiment, an increase in pressure in the first chamber causes the first flexible diaphragm to move toward the second chamber. In another embodiment, a decrease in pressure in the second chamber causes the first flexible diaphragm to move toward the second chamber.

In another embodiment of the invention, the controller further includes a valve seat located adjacent the second port. The first valve member disengages from the valve seat to open the second port and engages the valve seat to close the second port. The valve seat and first valve member are configured such that the first valve member is centered with respect to the valve seat when the first valve member engages the valve seat.

In another embodiment of the invention, the housing includes and upper region, a lower region and an eighth port located in the sixth chamber. The third air flow path and the seventh port are positioned in the upper region such that liquid collecting in the upper region of the housing will flow from the third air flow path, through the seventh port, to the lower region of the housing and exit the controller through the eighth port.A controller for a vacuum sewage system according to another embodiment of the present invention includes a housing, a first chamber located in the housing, a second chamber located in the housing, an air flow path through the housing between the first and second chambers and an adjustable orifice located at least partially within the air flow path for controlling the rate of air flow between the first and second chambers.

A controller for a vacuum sewage system according to another embodiment of the present invention includes a housing, a first chamber located in the housing, a second chamber located in the housing, a flexible diaphragm located in the housing, a first port in communication with the first and second chambers, a second port in communication with the second chamber and with a source of substantially atmospheric pressure, a valve member located at least partially in the second chamber and a rod extending through the first port, the rod having a first end connected to the flexible diaphragm and a second end connected to the valve member. The valve member selectively opens and closes the first port so as to selectively permit or prevent air flow between the first and second chambers through the first port and selectively opens and closes the second port so as to selectively permit or prevent air flow between the second chamber and the source of substantially atmospheric pressure through the second port.

A controller for a vacuum sewage system according to another embodiment of the present invention includes a housing, a first chamber located in the housing, a second chamber located in the housing, an air flow path through the housing between the first and second chambers and a valve located at least partially in in the air flow path. The valve has a valve member having an open state and a closed state. The valve member further includes an opening permitting air at atmospheric pressure to flow from the first chamber to the second chamber when the valve member is in the closed state.

A controller for a vacuum sewage system according to another embodiment of the present invention includes a housing, a first chamber located in the housing, a second chamber located in the housing, a port extending between the first and second chambers, a valve seat located adjacent the port and a valve member for selectively opening and closing the port so as to selectively permit or prevent air flow between the first and second chambers. The valve member is configured to disengage from the valve seat to open the port and to engage the valve seat to close the port. The valve seat and valve member are configured such that the valve member is centered with respect to the valve seat when the valve member engages the valve seat.

A controller for a vacuum sewage system according to another embodiment of the present invention includes a housing having an upper region and a lower region, a chamber located in the housing, a first port extending between the upper region and the chamber and a second port located in the chamber. The first port is positioned above the second port such that liquid collecting in the upper region of the housing will flow through the first port to the lower region of the housing and exit the controller through the second port.

These and other features of the present invention will be apparent from the following description and accompanying drawings.

### BRIEF DESCRIPTION OF THE DRAWINGS

Figure 1 is a plan view of a section of a vacuum sewage system according to one embodiment of the present invention.
Figure 2A is a side perspective view of a controller that is a component of the system of Figure 1.
Figure 2B is a bottom perspective view of the controller of Figure 2A.
Figure 2C is an end view of the controller of Figure 1.
Figure 3 is a cross sectional view taken along line 3-3 in Figure 2C showing the controller in the standby state.
Figure 3A is an enlarged view of detail 3A in Figure 3.
Figure 3B is an enlarged view of detail 3B in Figure 3.
Figure 3C is an enlarged view of detail 3C in Figure 3.
Figure 3D is an enlarged view of detail 3D in Figure 3.
Figure 3E is an enlarged view of detail 3E in Figure 3.
Figure 4 is a cross sectional view taken along line 4-4 in Figure 3.
Figure 5 is a cross sectional view taken along line 5-5 in Figure 3.
Figure 6 is an enlarged view of detail 6 in Figure 3.
Figure 7 is a cross sectional view taken along line 3-3 in Figure 2A showing the controller in the activated state.
Figure 7A is an enlarged view of detail 7A in Figure 7.
Figure 7B is an enlarged view of detail 7B in Figure 7.
Figure 7C is an enlarged view of detail 7C in Figure 7.
Figure 8A is a perspective view of another embodiment of an adjustable orifice that is a component of a controller according to one embodiment of the present invention.
Figure 8B is a top plan view of the adjustable orifice shown in Figure 8A.
Figure 8C is a cross-sectional view taken along line 8C-8C in Figure 8B.
Figure 8D is a cross-sectional view taken along line 8D-8D in Figure 8B.
Figure 8E is an enlarged view similar to that of detail 3C but rotated 90 degrees illustrating the adjustable orifice of Figure 8A installed in a controller according to one embodiment of the present invention.
Figure 9A is an alternative embodiment of the components shown in Figure 3E.
Figure 9B is a cross sectional view taken along line 9-9 in Figure 3.
Figure 10A is a front plan view of an activation tool for a controller according to one embodiment of the present invention.
Figure 10B is a side plan view of the activation tool in Figure 10A.
Figure 10C is a detail view of a portion of the activation tool in Figure 10A.

### DETAILED DESCRIPTION OF THE EMBODIMENTS OF THE INVENTION

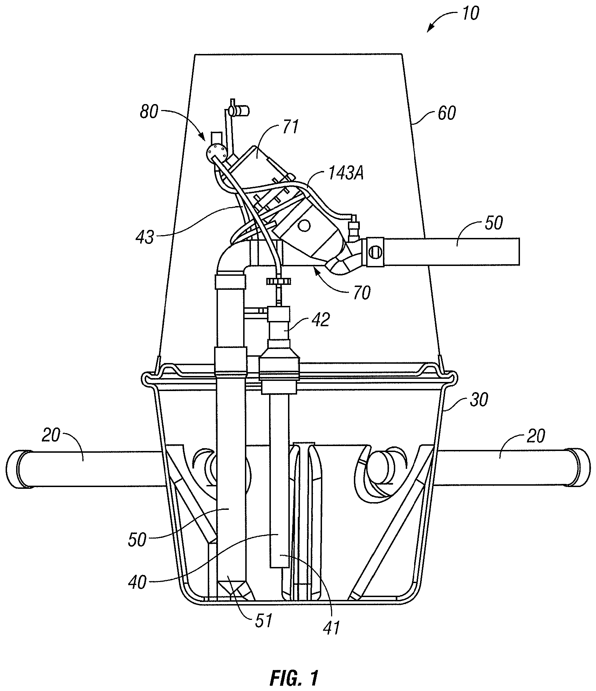

Figure 1 illustrates a vacuum sewage system 10 including a controller according to one embodiment of the present invention. System 10 includes gravity sewer conduits 20 at atmospheric pressure which drains from a sewage origination point, such as a toilet. Conduits 20 transport sewage to a holding tank 30, which is maintained at atmospheric pressure. A sensor pipe 40 and a discharge conduit 50 extend into tank 30. A first end 41 of pipe 40 extends downwardly into tank 30 to a point spaced above the inlet opening 51 of a discharge conduit 50. The second end 42 of pipe 40 extends into a valve pit 60.

Discharge conduit 50 extends into the valve pit 60 to a valve 70. Numerous types of valves 70 are known in the industry. One example of a valve 70 that can be used with system 10 is disclosed in U.S. Patent No. 4,171,853. Valve 70 is operated by a controller 80, which will be described in greater detail below. The section of discharge conduit 50 downstream from valve 70 is maintained at vacuum or low pressure by a source of applied vacuum (not shown). Discharge conduit 50 ultimately discharges into a collection station (not shown), which is also maintained at vacuum or low pressure. One type of collection station suitable for use with the present invention is disclosed in U.S. Patent No. 4,179,371.

In use, sewage is discharged through conduit 20 into tank 30. Under preselected pressure conditions in tank 30 (i.e. when the sewage content of tank 30 is such that a discharge cycle is warranted) valve 70 is opened by controller 80. Opening valve 70 creates a differential pressure between the relatively low pressure or vacuum portion of discharge conduit 50 downstream from valve 70 and the relatively higher or atmospheric pressure portion of discharge conduit 50 upstream from valve 70. This pressure differential causes discharge of the sewage in tank 30 through inlet opening 51 of discharge conduit 50, past valve 70, through the portion of discharge conduit 50 downstream from valve 70 and ultimately to the collection station. Upon completion of the discharge of sewage from tank 30 through the discharge conduit 50, valve 70 is automatically closed and the vacuum sewage transport system of the invention is restored to the stand-by condition.

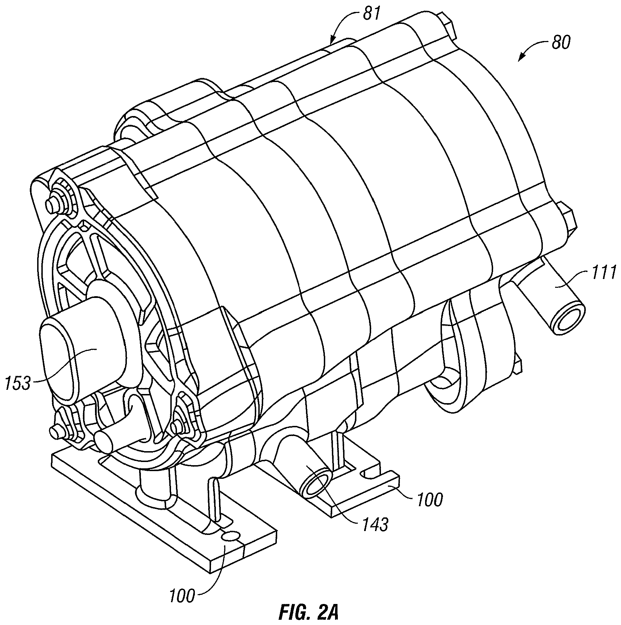

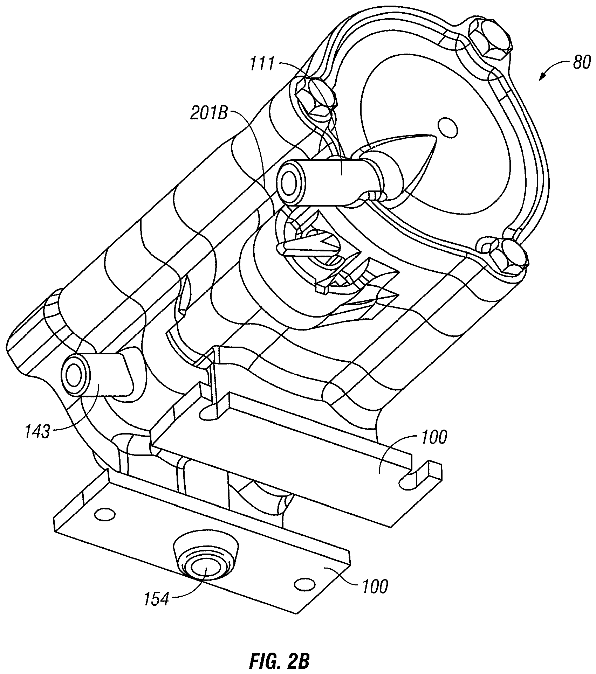

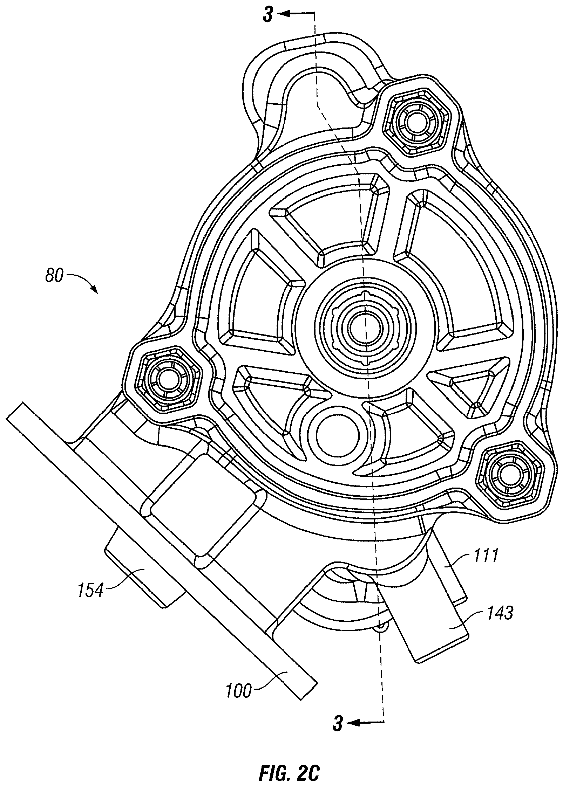

Controller 80 (Figures 2A and B) is mounted on valve 70 by one or more brackets 100 or other suitable means. Controller 80 includes a housing 81 formed from an assembly of generally cylindrical and axially aligned sections 110, 120, 120A, 130, 140 and 150. The sections may be secured together by a series of bolts or other fasteners (not shown). Seals S are located between adjacent sections.

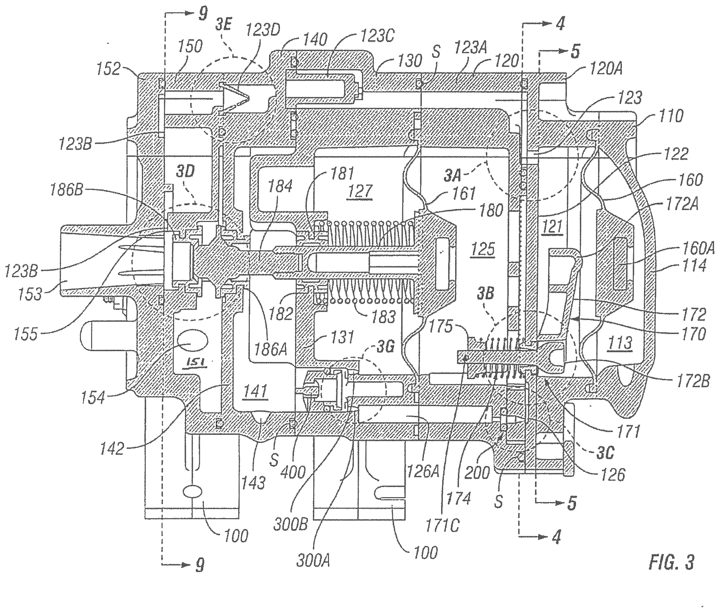

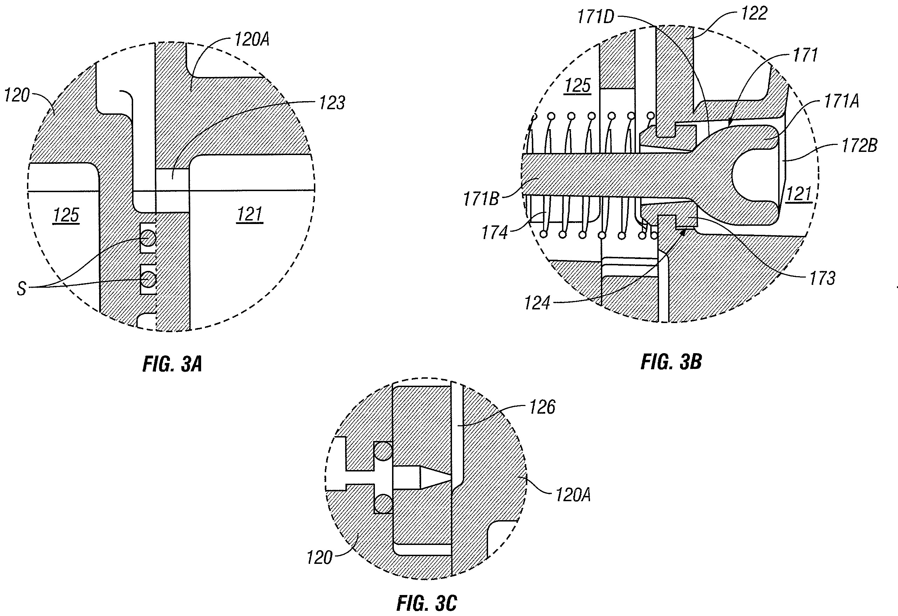

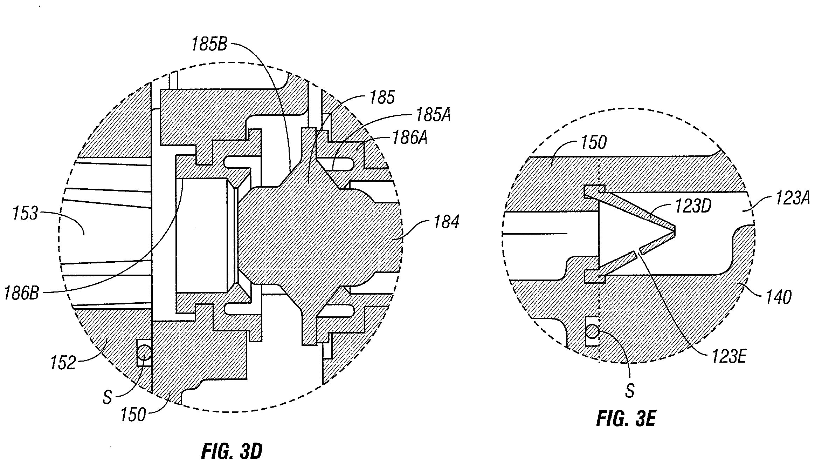

A pressure sensor conduit 43 is disposed in pressure communication with pipe 40 at one of its ends and, at its opposite end, is coupled to a pressure sensor port 111 of section 110. Port 111 opens into a first chamber 113 which is defined by a wall 114 of section 110 and a flexible diaphragm 160. A second chamber 121 is located on the opposite side of diaphragm 160 and is formed by diaphragm 160 and a wall 122 of section 120A. Chamber 121 is normally vented to atmosphere through a port 123 (Figs. 3 and 3A). A port 124 extends through wall 122 providing an air flow path between chambers 121 and 125 (Fig. 3B).

A valve and actuator assembly 170 (Figs. 3 and 3B) is located in second chamber 121 and is used to selectively allow flow between chambers 121 and 125. Valve and actuator assembly 170 includes a sealing member 171, an actuating lever 172, a seal seat 173, a biasing means 174 and a retainer 175. In the embodiment shown, biasing means 174 is a spring. Sealing member 171 in the embodiment shown includes a head portion of 171A with a shaft 171B extending from a rounded surface 171D. An opening 171C extends through the free end of shaft 171B. Lever 172 includes a first end 172A and a second end 172B. Seal seat 173 is positioned in port 124. Sealing member 171 and lever 172 are located in chamber 121 on one side of wall 122. Shaft 171B extends through seal seat 173. Note that rounded surface 171D of sealing member 171 is self-centering on seal seat 173. Biasing means 174 is positioned on the opposite side of wall 122 and is positioned around shaft 171B. Shaft 171B extends through retainer 175 and is secured in place by inserting pin 175A through opening 171C in shaft 171B.

A third chamber 125 is formed by wall 122 and a diaphragm 161. A port 126 (Figs. 3 and 3C) extends between sections 120A and 120 of controller 80 and communicates with chamber 125.

A fourth chamber 127 is formed by diaphragm 161 and a wall 131 of section 130. A generally cylindrical rod 180 abuts and extends laterally from diaphragm 161, through an opening 181 in wall 131 and through a seal 182 positioned in opening 181 to prevent fluid or pressure leakage from chamber 127. A biasing means 183 (which is a spring in the embodiment shown) is located between diaphragm 161 and a wall 131 to maintain diaphragm 161 in the stand-by position illustrated in Figure 3.

A fifth chamber 141 is located on the opposite side of wall 131 from chamber 127 and is formed by wall 131 and a wall 142 of section 140. A vacuum port 143 extends from section 140 and connects to a vacuum line that communicates with the vacuum side of discharge conduit 50 as described in greater detail below. Tapered rod 184 extends from rod 180 opposite diaphragm 161. In the stand-by position illustrated in Figure 3, all of tapered rod 184 is located in chamber 141 to preclude leakage of vacuum or low pressure therefrom.

A sixth chamber 151 is defined by wall 142 and wall 152 of section 150. An atmospheric pressure port 153 extends from wall 152 and is in communication with chamber 151. A valve connection port 154 also extends from section 150.

A sealing member 185 (Figs. 3 and 3D) having a first sealing side 185A and a second sealing side 185B is secured to one end of shaft 184. A first valve seat 186A is located in an opening in wall 142 through which shaft 184 extends. A second valve seat 186B is located adjacent the opening to port 153. When the controller is in the stand-by condition of Figures 3 and 3D, side 185A of sealing member 185 engages valve seat 186A to prevent vacuum communication from chamber 141 with chamber 151 and valve connection port 154. In this position, chamber 151 and valve connection port 154 are under atmospheric pressure as a result of being in communication with atmospheric pressure port 153.

Port 123 is in communication with port 153 through a flow path 123A and two ports 123B (Fig. 3). An air filter 123C and a duck bill valve 123D (Figs. 3 and 3E) are located in flow path 123A between port 123 and port 123B. Note that duck bill valve 123D includes a port 123E through which air at atmospheric pressure can flow even when orifice 123D is closed as shown in Figures 3 and 3E.

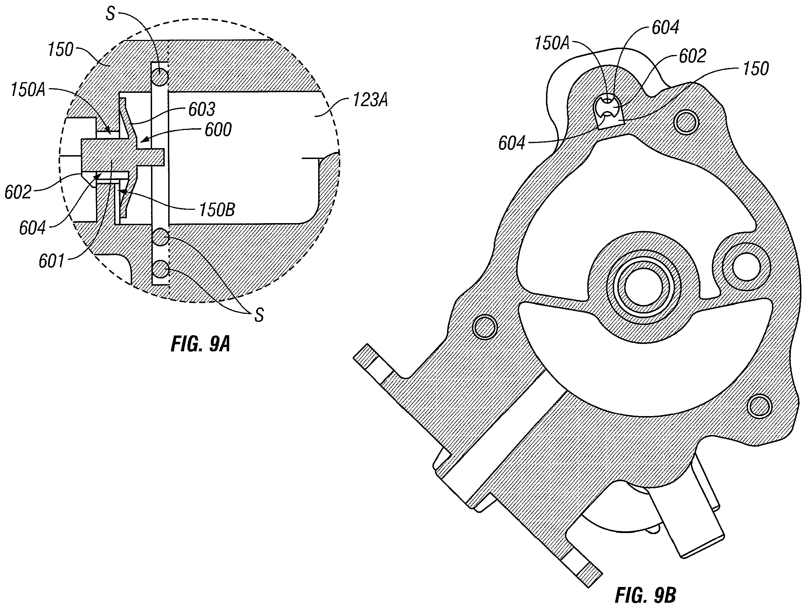

Figures 9A and 9B show an alternative to duck bill valve 123D. In this embodiment of the invention, a check valve 600 includes a body portion 601 extending through an opening 150A in section 150, a head 602 in contact with section 150 on one side of opening 150A and an annular flange 603. One or more grooves or passageways 604 extend through head 602 to opening 150A. Section 150 further includes a groove or passageway 150B extending from at least one passageway 604 beyond the outer perimeter of flange 603. In this manner, flange 603 can seal against section 150 about its entire outer perimeter except in the location of passageway 150B. As a result, air at atmospheric pressure can flow through passageway 604, to passageway 150B and around flange 603 even when flange 603 is seated against section 150 as shown in Figure 9A.

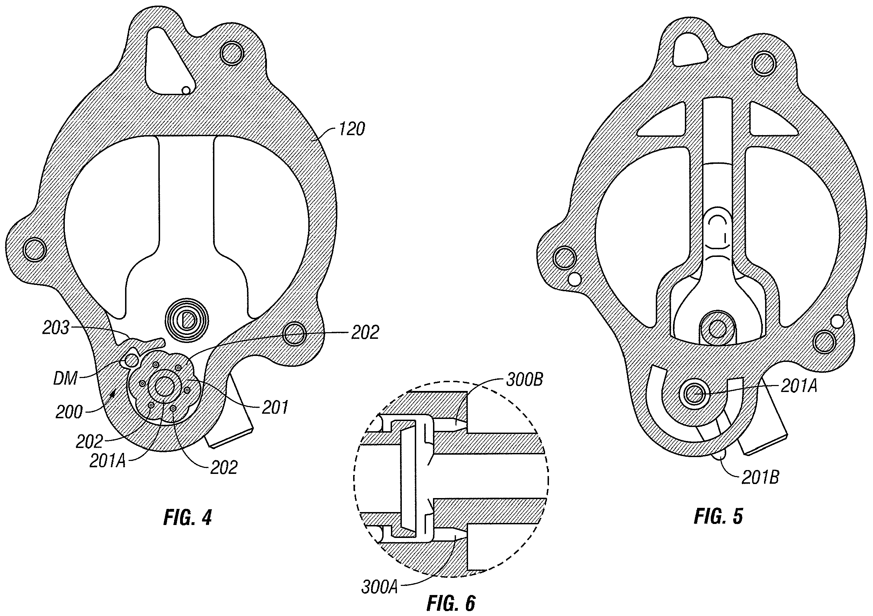

The speed of air flow through and pressure equalization between chambers 121, 125, 127 and 141 is controlled by port 126 and a series of orifices, valves and chambers. Chamber 125 is in communication with chamber 126A through port 126 and adjustable orifice 200 (Figs. 3 and 4). Adjustable orifice 200 includes notched member 201 having a plurality of orifices 202 of varying sizes extending therethrough. Member 201 is mounted on a rotatable shaft 201A in section 120 adjacent wall 122. A portion 203 of section 120 retains member 201 in controller 80. A lever 201B may be used to rotate member 201 to align the orifice 202 of the desired size such that it is in communication with port 126 as shown in Figures 4 and 5. A detent member DM is provided adjacent member 201. In one embodiment, detent member DM is a compressible member, that locates within successive recesses of notched member 201 as it is rotated, thereby indicating alignment of successive orifices 202 with port 126.

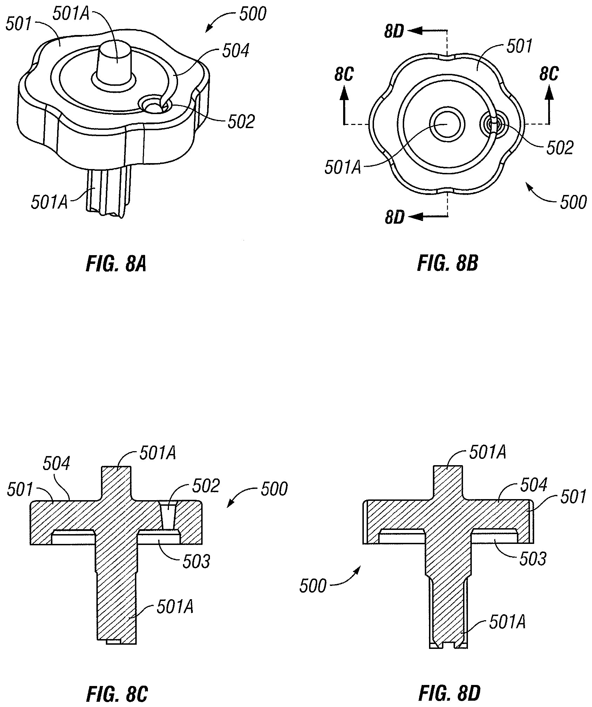

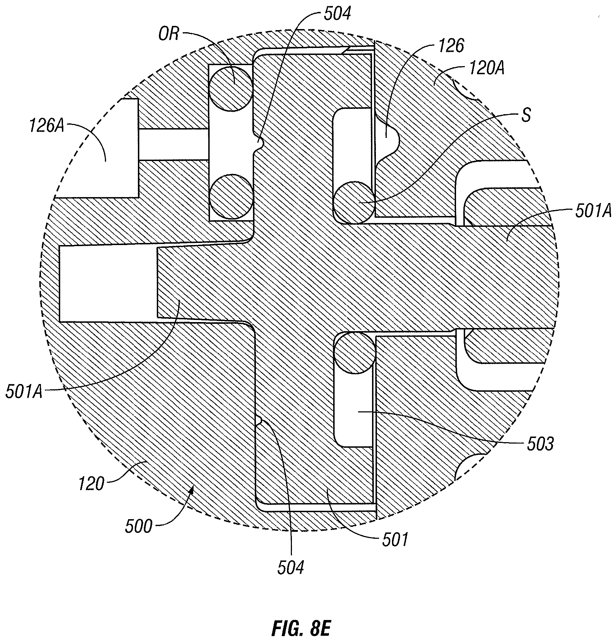

Figures 8A-8E show an alternative embodiment of an adjustable orifice for use with controllers according to certain embodiments of the present invention. Adjustable orifice 500 includes a notched member 501 having an orifice 502 extending therethrough. Member 501 is mounted on a rotatable shaft 501A in sections 120 and 120A. A first continuous groove 503 extends around shaft 501A on one side of member 501 and is in fluid communication with orifice 502. A second groove 504 extends around shaft 501A on the opposite side of member 501 and is in fluid communication with orifice 502. Groove 504 is of varying width and depth. Adjustable orifice 500 is mounted within controller 80 (Fig. 8E) such that groove 503 is in fluid communication with port 126 regardless of the orientation of member 501. An O-ring OR is positioned between a portion of section 120 and member 501 on the side of adjustable orifice 500 opposite groove 503. As adjustable orifice 500 is rotated, a segment of groove 504 having either greater or lesser volume is exposed inside O-ring OR and in fluid communication with chamber 126A. Air passing through port 126 into groove 503 will flow through orifice 502 and enter groove 504. Air will flow around groove 504 until it reaches the portion of groove 504 exposed within O-ring OR, at which point air will flow through the center of O-ring OR and into chamber 126A. The time it takes for air to flow from port 126 and into chamber 126A may be increased or decreased by exposing a section of groove 504 of greater or lesser volume within O-ring OR.

Chamber 126A can communicate with chambers 127 and 141 through orifices 300A and B and check valve 400 (Figs. 3 and 6). Check valve 400 is in the open position when controller 80 is in the stand-by mode. This serves, through vacuum port 143, ports 126 and orifices 200, 300A and 300B, to maintain equalized pressure in chambers 125, 127 and 141 at the low or vacuum pressure of the section of conduit 50 downstream from valve 70 during stand-by. Fluid communication between chambers 125, 127 and 141 is achieved and controlled by this series of ports, orifices and valves, as described in greater detail below.

Vacuum is supplied to controller 80 through a vacuum line 143A connected to vacuum port 143 in a manner known in the art, such as the one disclosed in U.S. Patent No. 4,171,853. Vacuum line 143A communicates with the section of discharge conduit 50 downstream from valve 70 and thereby supplies a constant low pressure or vacuum source to the controller through the vacuum line and vacuum port 143. In stand-by mode, chamber 151 is maintained at atmospheric pressure through an air breather (not shown) which communicates with port 153 in a manner known in the art. The controller communicates with the valve 70 through valve connector port 154, which is in pressure communication with the upper end 71 of valve 70.

In normal operation, controller 80 will remain in the stand-by condition illustrated in Figure 3. In this state, head portion 171A of sealing member 171 is seated on seal seat 173 by the force of biasing means 174 and the pressure differential between chambers 121 (which is at atmospheric pressure) and chamber 125 (which is at low or vacuum pressure).

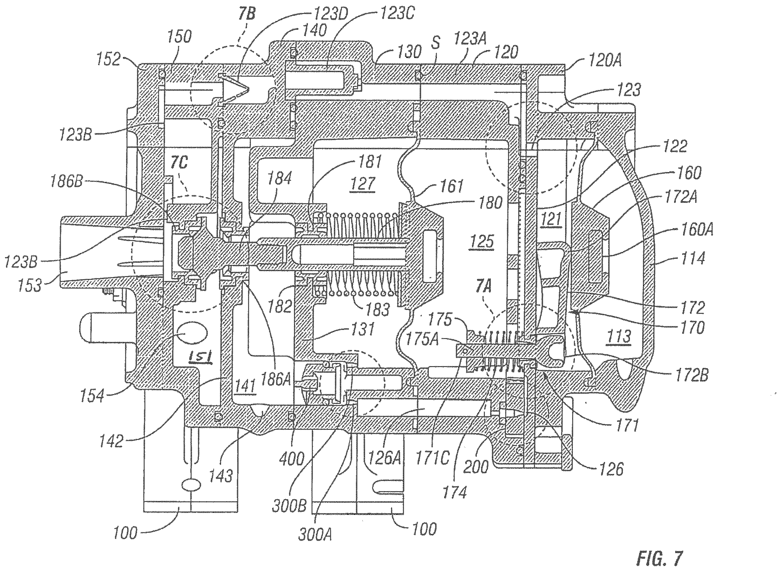

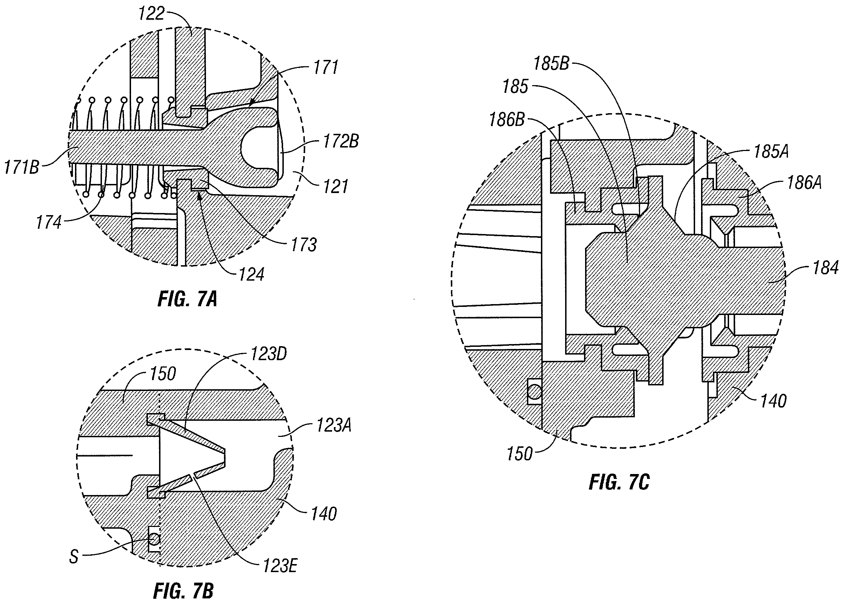

Sewage accumulation in tank 30 produces pressure in pipe 40, which is communicated to chamber 113 through pressure sensor port 111 through conduit 43. This pressure increase urges diaphragm 160 toward wall 122 as shown in Figure 7. As diaphragm 160 moves toward wall 122, it applies pressure to first end 172A of lever 172. This in turn causes first end 172A to move toward wall 122 and second end 172B to pivot away from wall 122. As second end 172B pivots away from wall 122, it draws head portion 171A of sealing member 171 away from sealing seat 173 against the biasing force of biasing means 174, as illustrated in Figure 7A. This establishes fluid and atmospheric pressure communication between chambers 121 and 125 as atmospheric air flows from port 153, through flow path 123A and through port 123 into chamber 121 and through port 124. Note that the flow of air causes duck bill valve 123D to open as shown in Figure 7B. Alternatively, if check valve 600 is used, the flow of air through passageways 604 and opening 150A will cause flange 603 to unseat from section 150 to permit increased air flow.

As the low or vacuum pressure in chamber 125 is increased by the introduction of air at atmospheric pressure, diaphragm 161 is urged toward wall 131 by the combination of the increased pressure in chamber 125 and the low or vacuum pressure in chamber 127. This causes rod 180 and tapered rod 184 to move toward wall 152. As this occurs, first sealing side 185A of sealing member 185 disengages valve seat 186A and second sealing side 185B seats against valve seat 186B, thereby closing atmospheric air port 153 against further communication of atmospheric air into chamber 151 and valve connector port 154. As first sealing side 185A moves away from valve seat 186A, fluid and pressure communication between chambers 141 and 151 is established as air flows around sealing member 155 and tapered post 184. This exposes chamber 151 to low or vacuum pressure from vacuum port 143.

As the atmospheric pressure communicating with valve 70 through valve connector port 154 is decreased under the influence of vacuum pressure from chamber 141, valve 70 is activated in a manner known in the art, such as the manner described in U.S. Patent No. 4,179,371. As valve 70 is opened, the upstream portion of discharge conduit 50 is placed under low or vacuum pressure. Since tank 30 is essentially at atmospheric pressure, the low or vacuum pressure in discharge conduit 50 causes the sewage to be discharged into discharge conduit 50 and transported to the collection station.

The discharge of sewage from tank 30 produces an almost immediate drop of pressure in communication with diaphragm 160 through pipe 40, thereby reducing the pressure in chamber 113. This draws diaphragm 160 away from wall 122 and first end 172A of lever 172. As a result, head portion 171A of sealing member 171 is urged against sealing seat 173 under the influence of biasing means 174, thereby preventing flow from chamber 121 to chamber 125 through port 124. This causes the vacuum in chambers 141 and 151 to drop, resulting in the closure of check valve 400 as the pressure in chambers 125 and 127 begins to equalize. The rate of equalization is controlled by the size of orifices 200, 300A and 300B and by the size of chamber 126A. For example, the smaller the orifices, the slower the equalization of pressure between the various chambers. Similarly, the larger the volume of chamber 126A, the longer the equalization time between the various chambers, as the larger reservoirs have greater volume that needs to be equalized. Use of larger volumes permits use of larger orifices, which in turn allows moisture to pass through controller 80 before the system vacuum is depleted. This also eliminates the need for dip tubes.

As the differential pressures in chambers 125 and 127 equalize, the diaphragm 161 moves toward wall 122 and draws first sealing side 185A back against valve seat 186A. This opens atmospheric air port 153. Atmospheric air pressure again communicates through valve connector port 154 and the resulting pressure change closes valve 70. The movement of sealing member 185 also prevents low or vacuum pressure from being transmitted from chamber 141 to chamber 151. When this occurs, check valve 400 resumes its normally open condition and pressure across chambers 125, 127 and 141 is equalized to that of the vacuum line pressure of conduit 50.

Because of the environment in which controller 80 operates, it is possible for moisture to accumulate in housing 81. In order to help remove moisture from the system, orifices 200, 300A and 300B and chamber 126A are positioned at the bottom of controller 80 so that any moisture collecting at the bottom of controller 80 will tend to be moved out of controller 80 as a result of the air flow caused during cycling. Moisture collecting at the top of controller 80 can flow through ports 123B adjacent wall 152 and around the space between sealing member 185 and valve seat 186B when controller 80 is in the standby mode shown in Figure 3. This moisture will flow into chamber 151 and through valve connection port 154.

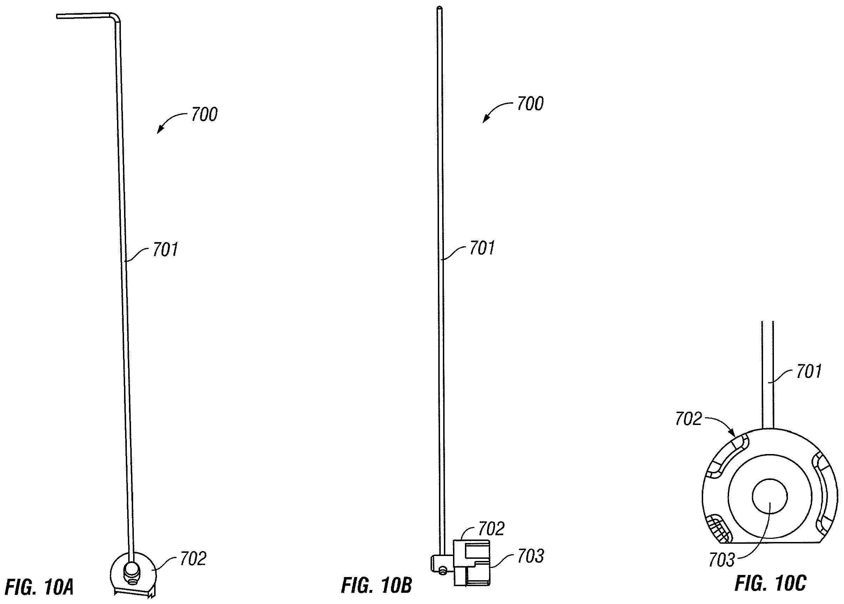

It may also be desirable to test controller 80 to ensure that it is operating properly. For this purpose, diaphragm 160 may be provided with a magnet 160A adjacent wall 114. Controller 80 can be activated by positioning a magnet of opposite polarity to magnet 160A adjacent wall 114. This will repel magnet 160A away from wall 114 so as to contact first end 172A of lever 172, thereby activating controller 80 as described above. Figures 10A-10C illustrate an activation tool 700 according to one embodiment of the present invention that can be used to activate controller 80. In the embodiment shown, activation tool 700 generally incudes a handle 701, an alignment portion 702 and a magnet 703. Handle 701 can be of any desired length. Alignment portion 702 is secured to handle 701 by molding adhesive or other means. Alignment portion 702 is configured to engage with a portion of housing 81 so as to locate magnet 703 sufficiently close to magnet 160A to activate controller 80. Magnet 703 has a polarity opposite that of magnet 160A. Magnet 703 is secured in alignment portion 702 by molding, adhesive or other means.

Although the present invention has been shown and described in detail the same is to be taken by way of example only and not by way of limitation. Numerous changes can be made to the embodiments described without departing from the scope of the invention. For example, the various orifices could be replaced by smaller diameter tubing sections or other means for restricting flow.

## Claims

1. A controller (80) for a vacuum sewage system (10), the system (10) including a holding tank (30) at substantially atmospheric pressure, a valve pit (60), a sensor pipe (40) having a first end extending into the holding tank (30) and a second end extending into the valve pit (60), a valve (70) located in the valve pit (60), a discharge conduit (50) for conveying sewage from the holding tank (30) to a location exterior to the holding tank (30), the discharge conduit (50) having a first section and a second section, the first section having a first end located in the holding tank (30) and a second end in fluid communication with the valve (70), the second section having an end in fluid communication with the valve (70) and a vacuum source for maintaining the second section of the discharge conduit (50) under vacuum, the controller (80) including:
a housing (81);
a first chamber (113) located in the housing (81);
a pressure sensor conduit (43) having a first end in pressure communication with the sensor pipe (40) and a second end in pressure communication with the first chamber (113);
a second chamber (121) located in the housing (81);
a first port (123) in communication with the second chamber (121) and with a source of atmospheric pressure;
a first flexible diaphragm (160) located between the first chamber (113) and the second chamber (121);
a third chamber (125) located in the housing (81);
a second port (124) extending between the second chamber (121) and the third chamber (125);
a first valve member (171) located at least partially within the second chamber (121) for selectively opening and closing the second port (124) so as to selectively permit or prevent air flow between the second chamber (121) and the third chamber (125) through the second port (124), wherein movement of the first flexible diaphragm (160) toward the second chamber (121) activates the first valve member (171) to open the second port (124), wherein an increase in pressure in the first chamber (113) causes the first flexible diaphragm (160) to move toward the second chamber (121);
a third port (126) in communication with the third chamber (125);
a fourth chamber (127) located in the housing (81);
a second flexible diaphragm (161) located between the third chamber (125) and the fourth chamber (127);
a first air flow path through the housing (81) from the third chamber (125), through the third port (126) and a further chamber (126A) to the fourth chamber (127);
a fifth chamber (141) located in the housing (81);
a fourth port (143) in communication with the fifth chamber (141) and with the second section of the discharge conduit (50);
a second air flow path through the housing (81) from the third chamber (125), through the third port (126) and a further chamber (126A) to the fourth chamber (127) and the fifth chamber (141);
a second valve member (400) located in the second air flow path to selectively permit or prevent air flow between the third chamber (125), the fourth chamber (127) and the fifth chamber (141);
a sixth chamber (151) located in the housing (81);
a fifth port in communication with the fifth chamber (141) and the sixth chamber (151);
a sixth port (153) in communication with the sixth chamber (151) and with a source of substantially atmospheric pressure;
a third valve member (185) located at least partially in the sixth chamber (151) for selectively opening and closing the fifth port so as to selectively permit or prevent air flow between the fifth chamber (141) and the sixth chamber (151) through the fifth port and for selectively opening and closing the sixth port (153) so as to selectively permit or prevent air flow between the sixth chamber (151) and the source of substantially atmospheric pressure through the sixth port (153);
a rod (180, 184) having a first end extending from the second flexible diaphragm (161) and a second end connected to the third valve member (185), wherein movement of the second flexible diaphragm (161) imparts movement to the rod (180, 184) and the third valve member (185) to selectively open and close the fifth port and the sixth port (153), wherein an increase in pressure in the third chamber (125) causes the second end of the rod (180, 184) to move toward the sixth port (153);
a seventh port (123B) in communication with the sixth chamber (151) and with a source of substantially atmospheric pressure via said sixth port (153);
a third air flow path through the housing (81) from the second chamber (121), through the first port (123) and to the seventh port (123B);
a fourth valve member (123D) located at least partially in the third air flow path; and
an adjustable orifice (200, 500) located at least partially within the first air flow path between the third chamber (125) and the fourth chamber (127);
**characterized in that** the adjustable orifice (200, 500) in a first configuration includes a member (201) having at least two orifices (202) of different sizes, or in a second configuration includes a member (501) having a first side, a first groove (503) located in the first side, a second side, a second groove (504) in the second side, and an orifice (502) extending from the first side to the second side creating an air flow path from the first groove (503) through the member (501) to the second groove (504), wherein the second groove (504) varies in width and/or depth, wherein the controller (80) further includes a sealing member (OR) having an opening therein adjacent to the second groove (504) and wherein movement of the member (501) selectively causes a larger or smaller volume segment of the second groove (504) to be exposed within the opening in the sealing member (OR) to increase or decrease the rate of air flow through the adjustable orifice (500).

2. The controller (80) according to claim 1, wherein the rod (180, 184) extends through the fifth port.

3. The controller (80) according to claim 2, wherein a portion of the rod (180, 184) is tapered.

4. The controller (80) according to claim 1, wherein a decrease in pressure in the fourth chamber (127) causes the second end of the rod (180, 184) to move toward the sixth port (153).

5. The controller (80) according to claim 1, wherein a decrease in pressure in the third chamber (125) causes the second end of the rod (180, 184) to move toward the fifth port.

6. The controller (80) according to claim 1, wherein an increase in pressure in the fourth chamber (127) causes the second end of the rod (180, 184) to move toward the fifth port.

7. The controller (80) according to claim 1, further including a biasing means (183) for biasing the third valve member (185) toward the fifth port.

8. The controller (80) according to claim 1, wherein the adjustable orifice (200, 500) regulates the rate of air flow from the third chamber (125) to the fourth chamber (127).

9. The controller (80) according to claim 1, wherein the member (201, 501) is rotatable.

10. The controller (80) according to claim 9, wherein the member (201, 501) is located on a shaft (201A, 501A).

11. The controller (80) according to claim 9, further including a lever (201B) located at least partially outside the housing (81) for rotating the member (201, 501).

12. The controller (80) according to claim 9, further including a detent member (DM) for retaining the rotatable member (2010, 501) in a selected position.

13. The controller (80) according to claim 12, wherein the detent member (DM) includes a compressible member.

14. The controller (80) according to claim 1, wherein a decrease in pressure in the second chamber (121) causes the first flexible diaphragm (160) to move toward the second chamber (121).

## Patentansprüche

1. Steuereinheit (80) für ein Vakuumentwässerungssystem (10), wobei das System (10) einen Haltetank (30) bei im Wesentlichen atmosphärischem Druck, einen Ventilschacht (60), ein Sensorrohr (40) mit einem ersten Ende, das sich in den Haltetank (30) erstreckt, und einem zweiten Ende, das sich in den Ventilschacht (60) erstreckt, ein Ventil (70), das sich im Ventilschacht (60) befindet, eine Auslassleitung (50) zum Befördern von Abwasser aus dem Haltetank (30) zu einer Stelle außerhalb des Haltetanks (30) beinhaltet, wobei die Auslassleitung (50) einen ersten Abschnitt und einen zweiten Abschnitt aufweist, wobei der erste Abschnitt ein erstes Ende, das sich im Haltetank (30) befindet, und ein zweites Ende in strömungstechnischer Kommunikation mit dem Ventil (70) aufweist, wobei der zweite Abschnitt ein Ende in strömungstechnischer Kommunikation mit dem Ventil (70) und eine Vakuumquelle zum Halten des zweiten Abschnitts der Auslassleitung (50) unter Vakuum aufweist, wobei die Steuereinheit (80) beinhaltet:
ein Gehäuse (81);
eine erste Kammer (113), die sich im Gehäuse (81) befindet;
eine Drucksensorleitung (43), die ein erstes Ende in Druckkommunikation mit dem Sensorrohr (40) und ein zweites Ende in Druckkommunikation mit der ersten Kammer (113) aufweist;
eine zweite Kammer (121), die sich im Gehäuse (81) befindet;
einen ersten Durchlass (123) in Kommunikation mit der zweiten Kammer (121) und mit einer Quelle von atmosphärischem Druck;
eine erste flexible Membran (160), die sich zwischen der ersten Kammer (113) und der zweiten Kammer (121) befindet;
eine dritte Kammer (125), die sich im Gehäuse (81) befindet;
einen zweiten Durchlass (124), der sich zwischen der zweiten Kammer (121) und der dritten Kammer (125) erstreckt;
ein erstes Ventilelement (171), das sich mindestens teilweise in der zweiten Kammer (121) befindet, um den zweiten Durchlass (124) selektiv zu öffnen und zu schließen, um so selektiv einen Luftstrom zwischen der zweiten Kammer (121) und der dritten Kammer (125) durch den zweiten Durchlass (124) zu erlauben oder zu verhindern, wobei Bewegung der ersten flexiblen Membran (160) zu der zweiten Kammer (121) das erste Ventilelement (171) aktiviert, um den zweiten Durchlass (124) zu öffnen, wobei eine Druckerhöhung in der ersten Kammer (113) bewirkt, dass sich die erste flexible Membran (160) zu der zweiten Kammer (121) bewegt;
einen dritten Durchlass (126) in Kommunikation mit der dritten Kammer (125);
eine vierte Kammer (127), die sich im Gehäuse (81) befindet;
eine zweite flexible Membran (161), die sich zwischen der dritten Kammer (125) und der vierten Kammer (127) befindet;
einen ersten Luftströmungsweg durch das Gehäuse (81) von der dritten Kammer (125) durch den dritten Durchlass (126) und eine weitere Kammer (126A) zu der vierten Kammer (127);
eine fünfte Kammer (141), die sich im Gehäuse (81) befindet;
einen vierten Durchlass (143) in Kommunikation mit der fünften Kammer (141) und mit dem zweiten Abschnitt der Auslassleitung (50);
einen zweiten Luftströmungsweg durch das Gehäuse (81) von der dritten Kammer (125) durch den dritten Durchlass (126) und eine weitere Kammer (126A) zu der vierten Kammer (127) und der fünften Kammer (141);
ein zweites Ventilelement (400), das sich im zweiten Luftströmungsweg befindet, um selektiv Luftstrom zwischen der dritten Kammer (125), der vierten Kammer (127) und der fünften Kammer (141) zu ermöglichen oder zu verhindern;
eine sechste Kammer (151), die sich im Gehäuse (81) befindet;
einen fünften Durchlass in Kommunikation mit der fünften Kammer (141) und der sechsten Kammer (151);
einen sechsten Durchlass (153) in Kommunikation mit der sechsten Kammer (151) und mit einer Quelle von im Wesentlichen atmosphärischem Druck;
ein drittes Ventilelement (185), das sich mindestens teilweise in der sechsten Kammer (151) befindet, um selektiv den fünften Durchlass zu öffnen und zu schließen, um so selektiv Luftstrom zwischen der fünften Kammer (141) und der sechsten Kammer (151) durch den fünften Durchlass zu ermöglichen oder zu verhindern und um selektiv den sechsten Durchlass (153) zu öffnen und zu schließen, um so selektiv Luftstrom zwischen der sechsten Kammer (151) und der Quelle von im Wesentlichen atmosphärischem Druck durch den sechsten Durchlass (153) zu ermöglichen oder zu verhindern;
eine Stange (180, 184) mit einem ersten Ende, das sich von der zweiten flexiblen Membran (161) erstreckt, und einem zweiten Ende, das mit dem dritten Ventilelement (185) verbunden ist, wobei Bewegung der zweiten flexiblen Membran (161) die Stange (180, 184) und das dritte Ventilelement (185) in Bewegung versetzt, um den fünften Durchlass und den sechsten Durchlass (153) selektiv zu öffnen und zu schließen, wobei eine Druckerhöhung in der dritten Kammer (125) bewirkt, dass sich das zweite Ende der Stange (180, 184) zu dem sechsten Durchlass (153) bewegt;
einen siebenten Durchlass (123B) in Kommunikation mit der sechsten Kammer (151) und mit einer Quelle von im Wesentlichen atmosphärischem Druck über den sechsten Durchlass (153);
einen dritten Luftströmungsweg durch das Gehäuse (81) von der zweiten Kammer (121), durch den ersten Durchlass (123) und zu dem siebenten Durchlass (123B);
ein viertes Ventilelement (123D), das sich mindestens teilweise in dem dritten Luftströmungsweg befindet; und
eine einstellbare Öffnung (200, 500), die sich mindestens teilweise in dem ersten Luftströmungsweg befindet, zwischen der dritten Kammer (125) und der vierten Kammer (127);
**dadurch gekennzeichnet, dass** die einstellbare Öffnung (200, 500) in einer ersten Konfiguration ein Element (201) mit mindestens zwei Öffnungen (202) unterschiedlicher Größe beinhaltet, oder in einer zweiten Konfiguration ein Element (501) mit einer ersten Seite, einer ersten Rille (503), die sich in der ersten Seite befindet, einer zweiten Seite, einer zweiten Rille (504) in der zweiten Seite und einer Öffnung (502), die sich von der ersten Seite zu der zweiten Seite erstreckt, wodurch ein Luftströmungsweg von der ersten Rille (503) durch das Element (501) zu der zweiten Rille (504) erzeugt wird, beinhaltet, wobei die zweite Rille (504) in Breite und/oder Tiefe variiert, wobei die Steuereinheit (80) weiter ein Dichtungselement (OR) mit einer Öffnung darin neben der zweiten Rille (504) beinhaltet, und wobei Bewegung des Elements (501) selektiv bewirkt, dass ein größeres oder kleineres Volumensegment der zweiten Rille (504) innerhalb der Öffnung in dem Dichtungselement (OR) freigelegt wird, um die Luftströmungsrate durch die einstellbare Öffnung (500) zu erhöhen oder zu senken.

2. Steuereinheit (80) nach Anspruch 1, wobei sich die Stange (180, 184) durch den fünften Durchlass erstreckt.

3. Steuereinheit (80) nach Anspruch 2, wobei ein Teil der Stange (180, 184) konisch verjüngt ist.

4. Steuereinheit (80) nach Anspruch 1, wobei eine Druckabnahme in der vierten Kammer (127) bewirkt, dass sich das zweite Ende der Stange (180, 184) zu dem sechsten Durchlass (153) bewegt.

5. Steuereinheit (80) nach Anspruch 1, wobei eine Druckabnahme in der dritten Kammer (125) bewirkt, dass sich das zweite Ende der Stange (180, 184) zu dem fünften Durchlass bewegt.

6. Steuereinheit (80) nach Anspruch 1, wobei eine Druckerhöhung in der vierten Kammer (127) bewirkt, dass sich das zweite Ende der Stange (180, 184) zu dem fünften Durchlass bewegt.

7. Steuereinheit (80) nach Anspruch 1, weiter beinhaltend ein Vorspannmittel (183) zum Vorspannen des dritten Ventilelements (185) zu dem fünften Durchlass.

8. Steuereinheit (80) nach Anspruch 1, wobei die einstellbare Öffnung (200, 500) die Luftströmungsrate von der dritten Kammer (125) zu der vierten Kammer (127) reguliert.

9. Steuereinheit (80) nach Anspruch 1, wobei das Element (201, 501) drehbar ist.

10. Steuereinheit (80) nach Anspruch 9, wobei sich das Element (201, 501) an einer Welle (201A, 501A) befindet.

11. Steuereinheit (80) nach Anspruch 9, weiter beinhaltend einen Hebel (201B), der sich mindestens teilweise außerhalb des Gehäuses (81) befindet, zum Drehen des Elements (201, 501).

12. Steuereinheit (80) nach Anspruch 9, weiter beinhaltend ein Arretierelement (DM), um das drehbare Element (2010, 501) in einer gewählten Position zu halten.

13. Steuereinheit (80) nach Anspruch 12, wobei das Arretierelement (DM) ein komprimierbares Element beinhaltet.

14. Steuereinheit (80) nach Anspruch 1, wobei eine Druckabnahme in der zweiten Kammer (121) bewirkt, dass sich die erste flexible Membran (160) zu der zweiten Kammer (121) bewegt.

## Revendications

1. Dispositif de commande (80) pour un système d'égout sous vide (10), le système (10) incluant un réservoir de stockage (30) à une pression sensiblement atmosphérique, une fosse de soupape (60), un tuyau de capteur (40) présentant une première extrémité s'étendant jusque dans le réservoir de stockage (30) et une seconde extrémité s'étendant jusque dans la fosse de soupape (60), une soupape (70) située dans la fosse de soupape (60), un conduit d'évacuation (50) pour transporter des eaux usées du réservoir de stockage (30) vers un emplacement extérieur au réservoir de stockage (30), le conduit d'évacuation (50) présentant une première section et une seconde section, la première section présentant une première extrémité située dans le réservoir de stockage (30) et une seconde extrémité en communication fluidique avec la soupape (70), la seconde section présentant une extrémité en communication fluidique avec la soupape (70) et une source de vide pour maintenir la seconde section du conduit d'évacuation (50) sous vide, le dispositif de commande (80) incluant :
un boîtier (81) ;
une première chambre (113) située dans le boîtier (81) ;
un conduit de capteur de pression (43) présentant une première extrémité en communication de pression avec le tuyau de capteur (40) et une seconde extrémité en communication de pression avec la première chambre (113) ;
une deuxième chambre (121) située dans le boîtier (81) ;
un premier port (123) en communication avec la deuxième chambre (121) et avec une source de pression atmosphérique ;
une première membrane flexible (160) située entre la première chambre (113) et la deuxième chambre (121) ;
une troisième chambre (125) située dans le boîtier (81) ;
un deuxième port (124) s'étendant entre la deuxième chambre (121) et la troisième chambre (125) ;
un premier élément de soupape (171) situé au moins partiellement à l'intérieur de la deuxième chambre (121) pour ouvrir et fermer sélectivement le deuxième port (124) de manière à permettre ou empêcher sélectivement un écoulement d'air entre la deuxième chambre (121) et la troisième chambre (125) à travers le deuxième port (124), dans lequel le mouvement de la première membrane flexible (160) vers la deuxième chambre (121) active le premier élément de soupape (171) pour ouvrir le deuxième port (124), dans lequel une augmentation de pression dans la première chambre (113) amène la première membrane flexible (160) à se déplacer vers la deuxième chambre (121) ;
un troisième port (126) en communication avec la troisième chambre (125) ;
une quatrième chambre (127) située dans le boîtier (81) ;
une seconde membrane flexible (161) située entre la troisième chambre (125) et la quatrième chambre (127) ;
un premier trajet d'écoulement d'air à travers le boîtier (81) depuis la troisième chambre (125), à travers le troisième port (126) et une chambre supplémentaire (126A) vers la quatrième chambre (127) ;
une cinquième chambre (141) située dans le boîtier (81) ;
un quatrième port (143) en communication avec la cinquième chambre (141) et avec la seconde section du conduit d'évacuation (50) ;
un deuxième trajet d'écoulement d'air à travers le boîtier (81) depuis la troisième chambre (125), à travers le troisième port (126) et une chambre supplémentaire (126A) vers la quatrième chambre (127) et la cinquième chambre (141) ;
un deuxième élément de soupape (400) situé dans le deuxième trajet d'écoulement d'air pour permettre ou empêcher sélectivement un écoulement d'air entre la troisième chambre (125), la quatrième chambre (127) et la cinquième chambre (141) ;
une sixième chambre (151) située dans le boîtier (81) ;
un cinquième port en communication avec la cinquième chambre (141) et la sixième chambre (151) ;
un sixième port (153) en communication avec la sixième chambre (151) et avec une source de pression sensiblement atmosphérique ;
un troisième élément de soupape (185) situé au moins partiellement dans la sixième chambre (151) pour ouvrir et fermer sélectivement le cinquième port de manière à permettre ou empêcher sélectivement un écoulement d'air entre la cinquième chambre (141) et la sixième chambre (151) à travers le cinquième port et pour ouvrir et fermer sélectivement le sixième port (153) de manière à permettre ou empêcher sélectivement un écoulement d'air entre la sixième chambre (151) et la source de pression sensiblement atmosphérique à travers le sixième port (153) ;
une tige (180, 184) présentant une première extrémité s'étendant à partir de la seconde membrane flexible (161) et une seconde extrémité reliée au troisième élément de soupape (185), dans lequel un déplacement de la seconde membrane flexible (161) communique un déplacement à la tige (180, 184) et au troisième élément de soupape (185) pour ouvrir et fermer sélectivement le cinquième port et le sixième port (153), dans lequel une augmentation de la pression dans la troisième chambre (125) amène la seconde extrémité de la tige (180, 184) à se déplacer vers le sixième port (153) ;
un septième port (123B) en communication avec la sixième chambre (151) et avec une source de pression substantiellement atmosphérique via le sixième port (153) ;
un troisième trajet d'écoulement d'air à travers le boîtier (81) depuis la deuxième chambre (121), à travers le premier port (123) et jusqu'au septième port (123B) ;
un quatrième élément de soupape (123D) situé au moins partiellement dans le troisième trajet d'écoulement d'air ; et
un orifice ajustable (200, 500) situé au moins partiellement à l'intérieur du premier trajet d'écoulement d'air entre la troisième chambre (125) et la quatrième chambre (127) ;
**caractérisé en ce que** l'orifice ajustable (200, 500) dans une première configuration inclut un élément (201) présentant au moins deux orifices (202) de tailles différentes, ou dans une seconde configuration inclut un élément (501) présentant un premier côté, une première rainure (503) située dans le premier côté, un second côté, une seconde rainure (504) dans le second côté et un orifice (502) s'étendant du premier côté au second côté en créant un trajet d'écoulement d'air à partir de la première rainure (503) à travers l'élément (501) jusqu'à la seconde rainure (504), dans lequel la seconde rainure (504) varie en largeur et/ou en profondeur, dans lequel le dispositif de commande (80) inclut en outre un élément d'étanchéité (OR) présentant une ouverture en son sein adjacente à la seconde rainure (504) et dans lequel un déplacement de l'élément (501) amène sélectivement un segment de volume plus grand ou plus petit de la seconde rainure (504) à être exposé à l'intérieur de l'ouverture dans l'élément d'étanchéité (OR) pour augmenter ou diminuer le débit d'écoulement d'air à travers l'orifice ajustable (500).

2. Dispositif de commande (80) selon la revendication 1, dans lequel la tige (180, 184) s'étend à travers le cinquième port.

3. Dispositif de commande (80) selon la revendication 2, dans lequel une partie de la tige (180, 184) est effilée.

4. Dispositif de commande (80) selon la revendication 1, dans lequel une diminution de pression dans la quatrième chambre (127) amène la seconde extrémité de la tige (180, 184) à se déplacer vers le sixième port (153).

5. Dispositif de commande (80) selon la revendication 1, dans lequel une diminution de pression dans la troisième chambre (125) amène la seconde extrémité de la tige (180, 184) à se déplacer vers le cinquième port.

6. Dispositif de commande (80) selon la revendication 1, dans lequel une augmentation de pression dans la quatrième chambre (127) amène la seconde extrémité de la tige (180, 184) à se déplacer vers le cinquième port.

7. Dispositif de commande (80) selon la revendication 1, incluant en outre un moyen de sollicitation (183) pour solliciter le troisième élément de soupape (185) vers le cinquième port.

8. Dispositif de commande (80) selon la revendication 1, dans lequel l'orifice ajustable (200, 500) régule le débit d'écoulement d'air de la troisième chambre (125) à la quatrième chambre (127).

9. Dispositif de commande (80) selon la revendication 1, dans lequel l'élément (201, 501) est rotatif.

10. Dispositif de commande (80) selon la revendication 9, dans lequel l'élément (201, 501) est situé sur un arbre (201A, 501A).

11. Dispositif de commande (80) selon la revendication 9, incluant en outre un levier (201B) situé au moins partiellement à l'extérieur du boîtier (81) pour faire tourner l'élément (201, 501).

12. Dispositif de commande (80) selon la revendication 9, incluant en outre un élément de détente (DM) pour retenir l'élément rotatif (2010, 501) dans une position sélectionnée.

13. Dispositif de commande (80) selon la revendication 12, dans lequel l'élément de détente (DM) inclut un élément compressible.

14. Dispositif de commande (80) selon la revendication 1, dans lequel une diminution de pression dans la deuxième chambre (121) amène la première membrane flexible (160) à se déplacer vers la deuxième chambre (121).
